# EUROPÄISCHE PATENTANMELDUNG

(11) **EP 1 744 487 A1**
(43) Veröffentlichungstag der Anmeldung: **17.01.2007**
(21) Anmeldenummer: 06012813.9
(22) Anmeldetag: 22.06.2006
(51) Int. Cl.: H04L 12/10, G05B 19/418

(54) **Baukastensystem zur Energieversorgung eines drahtlosen I/O-Gerätes an welches ein oder mehrere Knoten angeschlossen sind**

(30) Priorität: 13.07.2005 DE 102005032647
(71) Anmelder: ABB PATENT GmbH, 68526 Ladenburg (DE)
(72) Erfinder: Steigmann, Richard, 67229 Gerolsheim (DE); Willmes, Christian, 67459 Böhl-Iggelheim (DE); Schutz, Jean, Dr., 69115 Heidelberg (DE)
(74) Vertreter: Miller, Toivo

(57) **Zusammenfassung**

Es wird ein Baukastensystem zur Energieversorgung eines drahtlosen I/O-Gerätes (1) mit Funkeinrichtung (2) vorgeschlagen, an welches ein oder mehrere jeweils als Sensor oder Aktor ausgebildete Knoten (3 - 7) jeweils über eine Verbindungsleitung (8) angeschlossen sind, mit Hilfe eines separaten Energieversorgungs-Gerätes (15, 18, 20, 21), wobei sowohl das I/O-Gerät (1) als auch das Energieversorgungs-Gerät (15, 18, 20, 21) mit einander korrespondierenden elektromechanischen Verbindungen (14, 16) ausgerüstet sind. Als Energieversorgungs-Geräte können wahlweise eingesetzt werden:
• ein Energieversorgungs-Gerät (15) zur Umwandlung von Magnetfeld-Energie in elektrische Energie,
• ein Energieversorgungs-Gerät (18) zur Umwandlung von Solarenenergie in elektrische Energie,
• eine Batterie,
• ein Adapter für Gleichstromversorgung (21).

## Beschreibung

Die Erfindung bezieht sich auf ein Baukastensystem zur Energieversorgung eines drahtlosen I/O-Gerätes, an welches ein oder mehrere Knoten angeschlossen sind.

Aus der DE 101 08 243 A1 ist ein System für eine eine Vielzahl von Sensoren und/oder Aktoren aufweisende Maschine oder Anlage bekannt,
- wobei an der Maschine oder Anlage mindestens eine Kommunikationseinrichtung montiert ist, an welche über kurze Verbindungskabel mindestens zwei Sensoren und/oder Aktoren angeschlossen sind,
- wobei die Kommunikationseinrichtung einen Modulator / Codierer mit nachgeschaltetem Funksender zum Senden von Sensorsignalen und/oder einen Funkempfänger mit nachgeschaltetem Demodulator / Decodierer zum Empfang von Aktor-Ansteuersignalen aufweist,
- wobei die Kommunikationseinrichtung über Funksignale mit einer Basisstation kommuniziert, welche mit einem Zentralrechner der Maschine oder Anlage verbunden ist und
- wobei die Basisstation einen Funkempfänger mit nachgeschaltetem Demodulator /Decodierer zum Empfang von Sensorsignalen und/oder einen Modulator / Codierer mit nachgeschaltetem Funksender zum Senden von Aktor-Ansteuersignalen aufweist.

Die Kommunikationseinrichtung kann zusätzlich zur elektrischen Energieversorgung der Sensoren und/oder Aktoren dienen, wozu die Maschine oder Anlage im Einflussbereich mindestens einer von einer Magnetfelderzeugungsvorrichtung gespeisten, ein Magnetfeld erzeugenden Primärwicklung liegt und wozu die Kommunikationseinrichtung mindestens eine zur Energieaufnahme aus diesem Magnetfeld geeignete Sekundärwicklung mit nachgeschaltetem Gleichrichter aufweist.

Der Erfindung liegt die Aufgabe zugrunde, ein variables Baukastensystem zur Energieversorgung eines drahtlosen I/O-Gerätes, an welches ein oder mehrere Knoten angeschlossen sind, anzugeben.

Diese Aufgabe wird erfindungsgemäß gelöst durch ein Baukastensystem zur Energieversorgung eines drahtlosen I/O-Gerätes mit Funkeinrichtung, an welches ein oder mehrere jeweils als Sensor oder Aktor ausgebildete Knoten jeweils über eine Verbindungsleitung angeschlossen sind, mit Hilfe eines Energieversorgungs-Gerätes, wobei sowohl das drahtlose I/O-Gerät als auch das Energieversorgungs-Gerät mit einander korrespondierenden elektromechanischen Verbindungen ausgerüstet sind.

Die mit der Erfindung erzielbaren Vorteile bestehen insbesondere darin, dass unabhängig von der Art der Energieversorgung dasselbe drahtlose I/O-Gerät entwickelt, produziert und auf Vorrat gehalten werden kann. Dies ermöglicht hohe Stückzahlen, was Kostenvorteile hat. Je nach Anwendungsfall kann das drahtlose I/O-Gerät mit einem passenden Energieversorgungsgerät bestückt werden, sei es ein Energieversorgungs-Gerät, welches Magnetfeld-Energie in elektrische Energie umwandelt, sei es ein Energieversorgungsgerät, welches Solarenergie in elektrische Energie umwandelt, sei es eine Batterie, sei es ein an ein Netz angeschlossener Adapter für eine Gleichstromversorgung oder sei es durch eine Wasserstoffzelle.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: ein drahtloses I/O-Gerät mit angeschlossenem Energieversorgungs-Gerät zur Umwandlung von Magnetfeld-Energie in elektrische Energie,
- Fig. 2: ein Energieversorgungs-Gerät zur Umwandlung von Solarenergie in elektrische Energie als Komponente des Baukastensystems,
- Fig. 3: eine Batterie als Energieversorgungs-Gerät als Komponente des Baukastensystems,
- Fig. 4: einen Adapter als Energieversorgungs-Gerät als Komponente des Baukastensystems,
- Fig. 5 - 7: unterschiedliche elektromechanische Verbindungen zwischen Energieversorgungs-Gerät und drahtlosem I/O-Gerät unter Einsatz eines Kabels,
- Fig. 8: eine Ausführungsform mit Mechanikform.

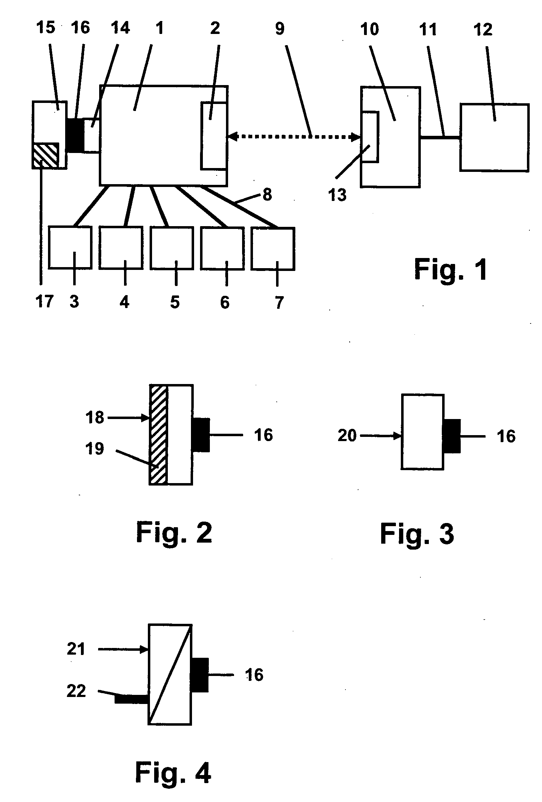

In Fig. 1 ist ein drahtloses I/O-Gerät mit angeschlossenem Energieversorgungs-Gerät zur Umwandlung von Magnetfeld-Energie in elektrische Energie dargestellt. Es ist ein drahtloses I/O-Gerät 1 mit integrierter Funkeinrichtung 2 (Funksender + Funkempfänger + Modulator / Codierer + Demodulator/ Decodierer + Antenne) zu erkennen, an das über jeweils separate Verbindungsleitungen 8 eine Vielzahl Knoten 3 - 7 (jeweils ein Sensor oder ein Aktor) angeschlossen ist. Das drahtloses I/O-Gerät 1 kommuniziert über eine Funkverbindung 9 mit einer Funkeinrichtung 13 (Funksender + Funkempfänger + Modulator / Codierer + Demodulator/ Decodierer + Antenne) einer Basisstation 10, welche ihrerseits über eine Verbindungsleitung 11 an einen Zentralrechner 12 (Automatisierungsgerät, Speicherprogrammierbare Steuerung) angeschlossen ist.

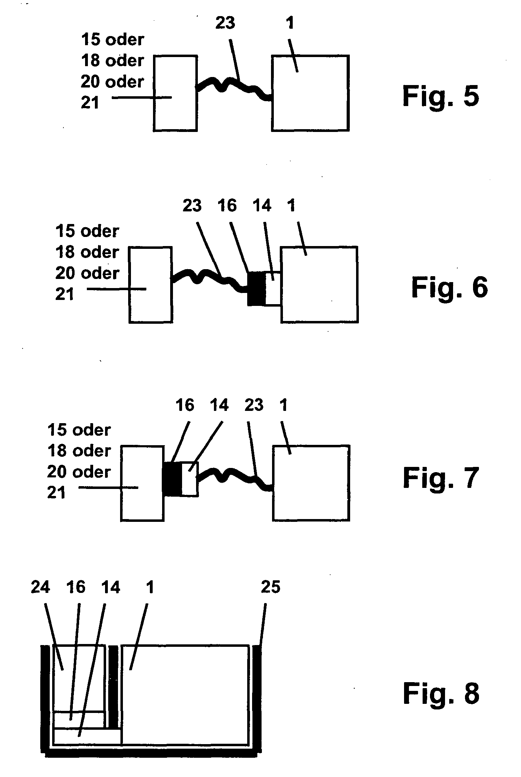

Zur Energieversorgung des drahtlosen I/O-Gerätes 1 ist ein Baukastensystem mit unterschiedlichen Komponenten vorgesehen, welche abhängig vom jeweiligen Anwendungsfall ausgesucht und in sehr einfacher Art und Weise angeschlossen werden können. Mit anderen Worten kann die Energieversorgung des drahtlosen I/O-Gerätes 1 über verschiedenartige Energieversorgungs-Geräte erfolgen. Für den Anschluss eines derartigen Energieversorgungs-Gerätes ist das drahtlose I/O-Gerät 1 mit einer elektromechanischen Verbindung, beispielsweise mit einer Steckvorrichtung 14 (oder einem Kabel mit oder ohne Kabel-Stecker, siehe Fig. 5 - 7) ausgerüstet. Alle geeigneten Energieversorgungs-Geräte weisen eine hierzu korrespondierende elektromechanische Verbindung, beispielsweise eine Steckvorrichtung 16 (oder ein Kabel mit oder ohne Kabel-Stecker, siehe Fig. 5 - 7) auf.

Als Energieversorgungs-Geräte (Powermodule) können wahlweise folgende Komponenten des Baukastensystems eingesetzt werden:
- Ein Energieversorgungs-Gerät 15 zur Umwandlung von Magnetfeld-Energie in elektrische Energie mit dreidimensionaler Wicklung 17, nachgeschaltetem Gleichrichter + Energiespeicher und Steckvorrichtung 16, wie in Fig. 1 gezeigt.
- Ein Energieversorgungs-Gerät 18 zur Umwandlung von Solarenergie in elektrische Energie mit Solarpanel 19 + Energiewandler + Energiespeicher und Steckvorrichtung 16, wie in Fig. 2 gezeigt.
- Eine Batterie 20 mit Steckvorrichtung 16, wie in Fig. 3 gezeigt.
- Ein Adapter 21 für Gleichstromversorgung (24 Volt) mit Netzanschluss (235 Volt) 22, Gleichrichter und Steckvorrichtung 16, wie in Fig. 4 gezeigt.
- Eine Wasserstoffzelle.

In den Fig. 5 - 7 ist gezeigt, dass die elektromechanische Verbindung zwischen Energieversorgungs-Gerät 15 oder 18 oder 20 oder 21 einerseits und dem drahtlosen I/O-Gerät 1 andererseits auch unter Einsatz eines Kabels 23 erfolgen kann:
- Das Kabel 23 kann über seine beiden Enden direkt über Klemmen (z. B. Schraubklemmen oder Steckklemmen) sowohl mit dem Energieversorgungsgerät 15 oder 18 oder 20 oder 21 als auch mit dem drahtlosen I/O-Gerät 1 verbunden sein, wie in Fig. 5 gezeigt.
- Das Kabel 23 kann fest mit dem Energieversorgungsgerät 15 oder 18 oder 20 oder 21 verbunden sein und an seinem freien Ende die Steckvorrichtung 16 (Kabelstecker) aufweisen, welche in die Steckvorrichtung 14 des drahtlosen I/O-Geräts 1 eingesteckt wird, wie in Fig. 6 gezeigt.
- Das Kabel 23 kann fest mit dem drahtlosen I/O-Gerät 1 verbunden sein und an seinem freien Ende die Steckvorrichtung 14 (Kabelstecker) aufweisen, welche in die Steckvorrichtung 16 des Energieversorgungsgeräts 15 oder 18 oder 20 oder 21 eingesteckt wird, wie in Fig. 7 gezeigt.

Sowohl das drahtlose I/O-Gerät 1 als auch das Energieversorgungs-Gerät 15 oder 18 oder 20 oder 21 können jeweils separate Gehäuse aufweisen, was insbesondere für die vorstehend unter Fig. 5-7 gezeigten Varianten gültig ist.

Alternativ kann eine in Fig. 8 dargestellte Ausführungsform mit Mechanikform eingesetzt werden. Bei dieser Ausführungsform ist eine Mechanikform (Gehäuse) 25 vorgesehen, in welche ein drahtloses I/O-Gerät 1 eingebaut ist. Diese Mechanikform 25 weist einen Einschubschacht auf, in welchen ein Energieversorgungs-Gerät 24 beliebiger Ausführungsform (entweder ein Gerät zur Umwandlung von Magnetfeld-Energie in elektrische Energie oder ein Gerät zur Umwandlung von Solarenergie in elektrische Energie oder eine Batterie oder ein Adapter für Gleichstromversorgung oder eine Wasserstoffzelle) eingeschoben wird. Für die elektrische Kontaktierung ist das I/O-Gerät 1 mit einer Steckvorrichtung 14 und das Energieversorgungs-Gerät 24 (Powermodul) mit einer Steckvorrichtung 16 versehen. Nach Einschub des Energieversorgungs-Gerätes 24 sind die elektrischen Verbindungen zum I/O-Gerät 1 automatisch hergestellt.

Die Konfiguration "Mechanikform 25 + I/O-Gerät 1" stellt quasi ein Basisgerät dar, welches mit einem beliebigen Energieversorgungs-Gerät (Powermodul) bestückbar ist, wobei diese Bestückung entweder bereits beim Hersteller/Lieferanten erfolgt (Endmontage) oder vom Kunden selbst durchgeführt wird. Auf diese Weise ist eine optimale universelle Modularität gewährleistet.

### Bezugszeichenliste:

- 1: drahtloses I/O-Gerät
- 2: Funkeinrichtung
- 3: Knoten (Sensor oder Aktor)
- 4: Knoten (Sensor oder Aktor)
- 5: Knoten (Sensor oder Aktor)
- 6: Knoten (Sensor oder Aktor)
- 7: Knoten (Sensor oder Aktor)
- 8: Verbindungsleitung
- 9: Funkverbindung
- 10: Basisstation
- 11: Verbindungsleitung
- 12: Zentralrechner (Automatisierungsgerät, Speicherprogrammierbare Steuerung)
- 13: Funkeinrichtung
- 14: Steckvorrichtung
- 15: Energieversorgungs-Gerät zur Umwandlung von Magnetfeld-Energie in elektrische Energie
- 16: Steckvorrichtung
- 17: Wicklung
- 18: Energieversorgungs-Gerät zur Umwandlung von Solarenergie in elektrische Energie
- 19: Solarpanel
- 20: Batterie als Energieversorgungs-Gerät
- 21: Adapter für eine Gleichstromversorgung als Energieversorgungs-Gerät
- 22: Netzanschluss
- 23: Kabel
- 24: Energieversorgungs-Gerät
- 25: Mechanikform

## Patentansprüche

1. Baukastensystem zur Energieversorgung eines drahtlosen I/O-Gerätes (1) mit Funkeinrichtung (2), an welches ein oder mehrere jeweils als Sensor oder Aktor ausgebildete Knoten (3 - 7) jeweils über eine Verbindungsleitung (8) angeschlossen sind, mit Hilfe eines separaten Energieversorgungs-Gerätes (15, 18, 20, 21, 24), wobei sowohl das drahtlose I/O-Gerät (1) als auch das separate Energieversorgungs-Gerät (15, 18, 20, 21, 24) mit einander korrespondierenden elektromechanischen Verbindungen (14, 16, 23) ausgerüstet sind.

2. Baukastensystem nach Anspruch 1, **dadurch gekennzeichnet, dass** sowohl das drahtlose I/O-Gerät (1) als auch das Energieversorgungs-Gerät (15, 18, 20, 21) separate Gehäuse aufweisen.

3. Baukastensystem nach Anspruch 1, **dadurch gekennzeichnet, dass** eine Mechanikform (25) vorgesehen, in welche ein drahtloses I/O-Gerät (1) eingebaut ist und welche einen Einschubschacht aufweist, in welchen ein separates Energieversorgungs-Gerät (24) beliebiger Ausführungsform einsteckbar ist.

4. Baukastensystem nach einem der vorstehenden Ansprüche, **gekennzeichnet durch** ein Energieversorgungs-Gerät (15) zur Umwandlung von Magnetfeld-Energie in elektrische Energie.

5. Baukastensystem nach Anspruch einem der vorstehenden Ansprüche, **gekennzeichnet durch** ein Energieversorgungs-Gerät (18) zur Umwandlung von Solarenenergie in elektrische Energie.

6. Baukastensystem nach Anspruch einem der vorstehenden Ansprüche, **gekennzeichnet durch** eine Batterie (20) als Energieversorgungs-Gerät.

7. Baukastensystem nach Anspruch einem der vorstehenden Ansprüche, **gekennzeichnet durch** einen Adapter für Gleichstromversorgung (21) als Energieversorgungs-Gerät.

8. Baukastensystem nach einem der vorstehenden Ansprüche, **gekennzeichnet durch** eine Wasserstoffzelle als Energieversorgungs-Gerät.

9. Baukastensystem nach einem der vorstehenden Ansprüche, **gekennzeichnet durch** Steckvorrichtungen (14, 16) als elektromechanische Verbindungen.

10. Baukastensystem nach einem der vorstehenden Ansprüche, **dadurch gekennzeichnet, dass** die elektromechanischen Verbindungen über ein Kabel (23) erfolgen.

11. Baukastensystem nach Anspruch 10, **dadurch gekennzeichnet, dass** das Kabel einerseits fest am Energieversorgungs-Gerät (15, 18, 20, 21) angeschlossen ist und andererseits eine Steckvorrichtung (16) aufweist.

12. Baukastensystem nach Anspruch 10, **dadurch gekennzeichnet, dass** das Kabel einerseits fest am drahtlosen I/O-Gerät (1) angeschlossen ist und andererseits eine Steckvorrichtung (14) aufweist.
